(19) Europäisches Patentamt
European Patent Office
Office européen des brevets

(11) EP 1 300 459 A1

(12) EUROPEAN PATENT APPLICATION
published in accordance with Art. 158(3) EPC

(43) Date of publication:
09.04.2003 Bulletin 2003/15

(21) Application number: 01941067.9

(22) Date of filing: 15.06.2001

(51) Int Cl.[7]: C10M 171/00, C10M 105/08, C10M 105/48, C10M 107/20, C10M 107/30, C09K 5/04 // C10N40:30

(86) International application number:
PCT/JP01/05119

(87) International publication number:
WO 01/096505 (20.12.2001 Gazette 2001/51)

(84) Designated Contracting States:
AT BE CH CY DE DK ES FI FR GB GR IE IT LI LU MC NL PT SE TR

(30) Priority: 15.06.2000 JP 2000179303

(71) Applicant: IDEMITSU KOSAN CO., LTD.
Tokyo 100-8321 (JP)

(72) Inventors:
- YAMAZAKI, Hirotaka
  Ichihara-shi, Chiba 299-0107 (JP)
- TAZAKI, Toshinori
  Deceased (JP)
- MOGAMI, Kenji
  Ichihara-shi, Chiba 299-0107 (JP)

(74) Representative:
Gille Hrabal Struck Neidlein Prop Roos
Patentanwälte,
Brucknerstrasse 20
40593 Düsseldorf (DE)

# (54) LUBRICATING OIL FOR REFRIGERATING MACHINE AND HYDRAULIC COMPOSITION CONTAINING THE SAME FOR USE IN REFRIGERATING MACHINE

(57) A lubricating oil for refrigerators which comprises a compound having oxygen as a base oil and is miscible with a refrigerant having no chlorine atoms and one carbon atom at a temperature of -10°C or lower when the lubricating oil is comprised at least in one content within the range of 3 to 50% by weight based on the entire amount of a mixture comprising the lubricating oil and the refrigerant; and a hydraulic fluid composition for refrigerators which comprises a refrigerant having no chlorine atoms and one carbon atom and the lubricating oil described above. The hydraulic fluid composition exhibits excellent miscibility of the lubricating oil with the above refrigerant and, in particular, with difluoromethane and also exhibits excellent antiwear, lubricity and stability.

Fig.1

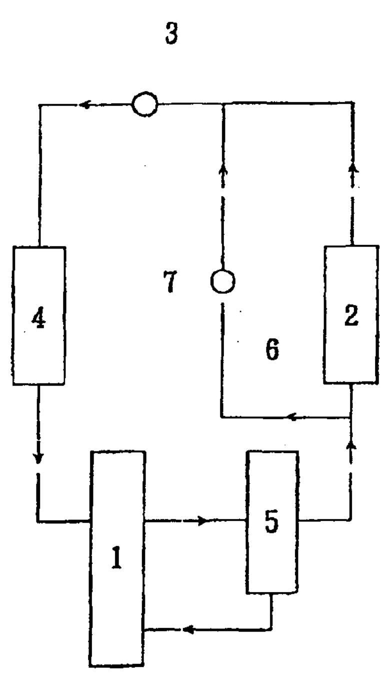


EP 1 300 459 A1

## Description

### TECHNICAL FIELD

The present invention relates to a lubricating oil for refrigerators and a hydraulic fluid composition for refrigerators using the lubricating oil. More particularly, the present invention relates to a lubricating oil for refrigerators which exhibits excellent miscibility with a refrigerant having no chlorine atoms and one carbon atom and, in particular, with difluoromethane and a hydraulic fluid composition for refrigerators which comprises the above lubricating oil for refrigerators and the above refrigerant and exhibits excellent antiwear, lubricity and stability.

### BACKGROUND ART

In general, compression-type refrigerators are constituted at least with a compressor, a condenser, an expansion mechanism such as an expansion valve and an evaporator and, where necessary, a drier and has a structure in which a mixed fluid of a refrigerant and a lubricating oil is circulated in the closed system. In the compression-type refrigerator, in general, temperature is high in the compressor and low in the refrigerating chamber although the conditions may be different depending on the type of the apparatus and it is required, in general, that the refrigerant and the lubricating oil be circulated in the system without causing phase separation in a wide temperature range. It is preferable that the maximum temperature in the region of phase separation at the low temperature side is -10°C or lower, more preferably -20°C or lower, still more preferably -30°C or lower, still more preferably -40°C or lower and most preferably -50°C or lower. When the phase separation takes place during the operation of refrigeration, the life and the efficiency of the apparatus are adversely affected to a great extent. For example, when the phase separation of the refrigerant and the lubricating oil takes place in the compressor, lubrication of moving parts deteriorates and seizure occurs to cause a great decrease in the life of the apparatus. When the phase separation takes places in the evaporator, the efficiency of heat exchange decreases because of the presence of lubricating oil of high viscosity.

As the refrigerant for the compression-type refrigerators, in particular, for air conditioners, heretofore, chlorodifluoromethane (referred to as R22, hereinafter) and a mixture of chlorodifluoromethane and chloropentafluoroethane in relative amounts of 48.8:51.2 (referred to as R502, hereinafter) have been mainly used. As the lubricating oil, various types of mineral oils and synthetic oils which satisfy the above condition have been used. However, R22 and R502 are more rigorously restricted world-wide because there is the possibility of causing environmental pollution such as destruction of the ozonosphere present in the stratosphere. As the novel type of the refrigerant, hydrofluorocarbons such as 1,1,1,2-tetrafluoroethane, difluoromethane, pentafluoroethane and 1,1,1-trifluoroethane (occasionally referred to as R134a, R32, R125 and R143a, respectively) are attracting attention. These hydrofluorocarbons and, in particular, R134a, R32, R125 and R143a have no potentiality of causing the ozonosphere destruction and are preferable as the refrigerant for the compression-type refrigerators.

Further improvements are required from the standpoint of the energy saving and difluoromethane (R32) among the above novel refrigerants is attracting attention. However, the refrigerant R32 is used at a higher pressure and a higher temperature than those of conventional refrigerants and there is the great possibility that problems arise on lubrication. It is the actual present situation that no lubricating oils exhibiting sufficient miscibility with R32 are found among the lubricating oils for refrigerants which have been examined for the use in combination with the above novel refrigerants. Development of a lubricating oil exhibiting miscibility with R32 at the same level as that with R134a, R407c (a mixture of R32, R125 and R134a in relative amounts by weight of 23:24:52) and R410A (a mixture of R32 and R125 in relative amounts by weight of 50:50) has been desired.

Under the above circumstances, the present invention has an object of providing a lubricating oil for refrigerators which exhibits excellent miscibility with a refrigerant having no chlorine atoms and one carbon atom and, in particular, with difluoromethane (R32) and a hydraulic fluid composition for refrigerators which comprises the above lubricating oil for refrigerators and the above refrigerant and exhibits excellent antiwear, Lubricity and stability.

The present inventors have been studying miscibility of compounds having oxygen such as polyether compounds, examples of which include polyoxyalkylene glycol derivatives and polyvinyl ether derivatives, and polyol ester derivatives in the presence of the refrigerant R32. However, these compounds do not always exhibit the sufficient miscibility with the refrigerant R32.

### DISCLOSURE OF THE INVENTION

As the result of intensive studies by the present inventors, it was found that polycarbonate compounds having at least two carbonate bonds in one molecule exhibited excellent miscibility with refrigerants having no chlorine atoms and one carbon atom and, in particular, with R32 at low temperatures and that a mixture containing the above compound and the above refrigerant can be used as the hydraulic fluid composition for refrigerators achieving the above object.

The present invention has been completed based on the above knowledge.

The present invention provides a lubricating oil for refrigerators which comprises a compound having oxygen as a base oil and is miscible with a refrigerant having no chlorine atoms and one carbon atom at a temperature of -10°C or lower when the lubricating oil is comprised at least in one content within a range of 3 to 50% by weight based on an entire amount of a mixture comprising the lubricating oil and the refrigerant; and, preferably, the above lubricating oil for refrigerators in which the compound having oxygen is a polycarbonate compound having at least two carbonate bonds in one molecule.

The present invention further provides a hydraulic fluid composition for refrigerators which comprises (A) a refrigerant having no chlorine atoms and one carbon atom and (B) a lubricating oil for refrigerators described above.

It is considered that the advantageous effect of the present invention is exhibited in the following manner. The lubricating oil for refrigerators of the present invention is used in combination with a refrigerant having no chlorine atoms and one carbon atom and, in particular, a fluorohydrocarbon-based refrigerant having no chlorine atoms. There is the tendency that the inner pressure is higher and the temperature during the use is also higher. Therefore, when the difference in the hardness between the parts constituting the metal sliding portion of the compression mechanism is set at a value greater than 10 as expressed by $H_{RC}$, where necessary, the antiwear of the part having a greater hardness is sufficiently improved while the antiwear of the part having a smaller hardness is surely kept at an ordinary value since the hardness is kept at the ordinary value. In this manner, antiwear of the necessary parts in the metal sliding portion can be improved and the adverse effect of the absence of the lubricating effect of chlorine atom due to the absence of chlorine atom in the fluorohydrocarbon refrigerant can be compensated. As for the tendency that the sliding part having a greater hardness accelerates wear of the sliding part having a smaller hardness, at least one compound selected from esters of orthophosphoric acid, esters of phosphorous acid and esters of acidic phosphoric acid is added to the lubricating oil as the extreme pressure agent and the insufficiency of lubrication due to the absence of chlorine atom in the fluorohydrocarbon refrigerant can be compensated by the working of the extreme pressure agent.

## BRIEF DESCRIPTION OF THE DRAWINGS

Figure 1 shows a flow diagram which exhibits an example of the refrigerating cycle of the compression type of the "compressor-condenser-expansion valve-evaporator" system having an oil separator and a hot gas line.
Figure 2 shows a flow diagram which exhibits an example of the refrigerating cycle of the compression type of the "compressor-condenser-expansion valve-evaporator" system having an oil separator.
Figure 3 shows a flow diagram which exhibits an example of the refrigerating cycle of the compression type of the "compressor-condenser-expansion valve-evaporator" system having a hot gas line.
Figure 4 shows a flow diagram which exhibits an example of the refrigerating cycle of the compression type of the "compressor-condenser-expansion valve-evaporator" system.

Description of the marks in the Figures:

1: A compressor
2: A condenser
3: An expansion valve
4: An evaporator
5: An oil separator
6: A hot gas line
7: A valve for a hot gas line

## THE MOST PREFERRED EMBODIMENT TO CARRY OUT THE INVENTION

The lubricating oil for refrigerators of the present invention will be described in the following.

The lubricating oil for refrigerators of the present invention comprises a compound having oxygen as a base oil and is miscible with a refrigerant having no chlorine atoms and one carbon atom such as R32 (which means that the liquid phase is homogeneous) at a temperature of -10°C or lower when the lubricating oil is comprised at least in one content within the range of 3 to 50% by weight based on the entire amount of a mixture comprising the lubricating oil and the refrigerant. The content of the lubricating oil exhibiting the miscibility with the refrigerant at a temperature of -10°C or lower is at least one content within the range of 3 to 50% by weight as described above. It is preferable

that the above range is 10 to 15% by weight. It is more preferable that the lubricating oil is miscible with the refrigerant in the entire range of the content of 3 to 50% by weight. When the temperature exhibiting the miscibility, i.e., the temperature of phase separation at the low temperature side, is higher than -10°C, there is the possibility that phase separation takes place during the operation of refrigeration.

When the phase separation takes place during the operation of refrigeration, the life and the efficiency of the apparatus are adversely affected to a great extent. For example, when the phase separation of the refrigerant and the lubricating oil takes place in the compressor, lubrication of moving parts deteriorates and seizure occurs to cause a great decrease in the life of the apparatus. When the phase separation takes places in the evaporator, the efficiency of heat exchange decreases due to the presence of lubricating oil of high viscosity.

Based on the above reasons, it is preferable that the maximum temperature in the region of phase separation at the low temperature side is -10°C or lower, more preferably -20°C or lower, still more preferably -30°C or lower, still more preferably -40°C or lower and most preferably -50°C or lower.

The compound having oxygen which provides the lubricating oil having the above properties is not particularly limited and various compounds can be used. It is preferable that the compound having oxygen is a polycarbonate compound having at least two carbonate bonds in one molecule. Preferable examples of the polycarbonate compound include at least one compound selected from:

compounds represented by general formula (I):

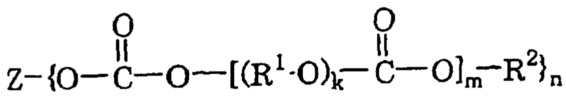

· · · (I)

wherein Z represents a residue group obtained by eliminating hydroxyl group from an alcohol having 1 to 12 carbon atoms and a functionality of **n**, $R^1$ represents a linear or branched alkylene group having 2 to 10 carbon atoms, $R^2$ represents a monovalent hydrocarbon group having 1 to 12 carbon atoms or a group having ether bond represented by $R^4(O\text{-}R^3)_p$-, $R^4$ representing hydrogen atom or a monovalent hydrocarbon group having 1 to 12 carbon atoms, $R^3$ representing a linear or branched alkylene group having 2 to 10 carbon atoms and **p** representing an integer of 1 to 10, **k** represents an integer of 1 to 30, **m** represents an integer of 1 to 50 and **n** represents an integer of 1 to 6; and

compounds represented by general formula (II):

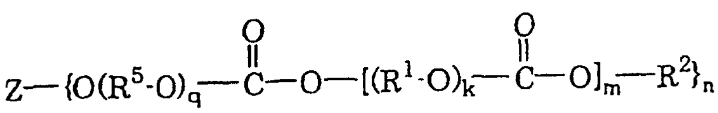

· · · (II)

wherein $R^5$ represents a linear or branched alkylene group having 2 to 10 carbon atoms, **q** represents an integer of 1 to 20 and Z, $R^1$, $R^2$, **k, m** and **n** are as described for general formula (I).

In the above general formulae (I) and (II), Z represents a residue group obtained by eliminating hydroxyl group from an alcohol having 1 to 12 carbon atoms and a functionality of 1 to 6. It is preferable that Z represents a residue group obtained by removing hydroxyl group from a monohydric alcohol having 1 to 12 carbon atoms.

Examples of the alcohol having 1 to 12 carbon atoms and a functionality of 1 to 6 from which the residue group represented by Z is derived include the following alcohols. Examples of the monohydric alcohol include aliphatic monohydric alcohols such as methyl alcohol, ethyl alcohol, n-propyl alcohol, isopropyl alcohol, various types of butyl alcohol, various types of pentyl alcohol, various types of hexyl alcohol, various types of octyl alcohol, various types of decyl alcohol and various types of dodecyl alcohol; alicyclic monohydric alcohols such as cyclopentyl alcohol and cyclohexyl alcohol; aromatic alcohols such as phenol, cresol, xylenol, butylphenol and naphthol; and aromatic aliphatic alcohols such as benzyl alcohol and phenetyl alcohol. Examples of the dihydric alcohol include aliphatic alcohols such as ethylene glycol, propylene glycol, butylene glycol, neopentylene glycol and tetramethylene glycol; alicyclic alcohols such as cyclohexanediol and cyclohexanedimethaonol; aromatic alcohols such as catechol, resorcinol, hydroquinone and dihydroxydiphenyl. Examples of the trihydric alcohol include aliphatic alcohols such as glycerol, trimethylolpropane, trimethylolethane, trimethylolbutane and 1,3,5-pentanetriol; alicyclic alcohols such as cyclohexanetriol and cyclohexane-trimethanol; and aromatic alcohols such as pyrogallol and methyl-pyrogallol. Examples of the alcohol having a functionality of 4 to 6 include pentaerythritol, digylcerol, triglycerol, sorbitol and dipentaerythritol.

Examples of the compound represented by general formula (I) as the example of the polycarbonate compound include compounds represented by general formula (I-a):

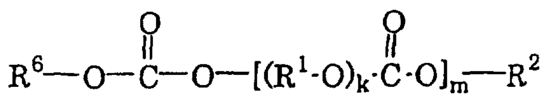

· · · (I-a)

wherein $R^6$ represents a residue group obtained by eliminating hydroxyl group from a monohydric alcohol having 1 to 12 carbon atoms and $R^1$, $R^2$, **k** and **m** are as described for general formula (I). Examples of the compound represented by general formula (II) as the example of the polycarbonate compound include compounds represented by general formula (II-a):

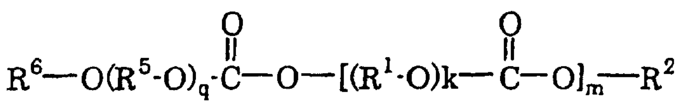

· · · (II－a)

wherein $R^1$, $R^2$, $R^5$, $R^6$, **k, m** and **q** are as described for general formulae (I), (II) and (I-a).

In general formula (I-a) and general formula (II-a), examples of the residue group represented by $R^6$ which is obtained by eliminating hydroxyl group from a monohydric alcohol having 1 to 12 carbon atoms include aliphatic hydrocarbon groups such as methyl group, ethyl group, n-propyl group, isopropyl group, various types of butyl group, various types of pentyl group, various types of hexyl group, various types of octyl group, various types of decyl group and various types of dodecyl group; alicyclic hydrocarbon groups such as cyclopentyl group, cyclohexyl group, methylcyclohexyl group, dimethylcyclohexyl group and decahydronaphthyl group; aromatic hydrocarbon groups such as phenyl group, various types of tolyl group, various types of xylyl group, mesityl group and various types of naphthyl group; and aromatic aliphatic hydrocarbon groups such as benzyl group, methylbenzyl group, phenetyl group and various types of naphthylmethyl group. Among these groups, linear and branched alkyl groups having 1 to 6 carbon atoms are preferable.

$R^1$ represents a linear or branched alkylene groups having 2 to 10 carbon atoms, preferably a linear or branched alkylene group having 2 to 6 carbon atoms and more preferably ethylene group or propylene group from the standpoint of the properties and the easiness of production. $R^2$ represents a monovalent hydrocarbon group having 1 to 12 carbon atoms or a group having ether bond represented by $R^4(O\text{-}R^3)_p$-, wherein $R^4$ represents hydrogen atom or a monovalent hydrocarbon group having 1 to 12 carbon atoms and preferably 1 to 6 carbon atoms, $R^3$ represents a linear or branched alkylene group having 2 to 10 carbon atoms and **p** represents an integer of 1 to 10. Examples of the monovalent hydrocarbon group having 1 to 12 carbon atoms described above include the same compounds as those described as the examples of the group represented by $R^6$. As the linear or branched alkylene group having 2 to 10 carbon atoms which is represented by $R^3$, linear and branched alkylene groups having 2 to 6 carbon atoms are preferable and ethylene group and propylene group are more preferable from the same standpoint as that described above for $R^1$.

As the group represented by $R^2$, linear and branched alkyl groups having 1 to 6 carbon atoms are preferable.

As the linear or branched alkylene group having 2 to 10 carbon atoms which is represented by $R^5$ in general formula (II-a), linear and branched alkylene groups having 2 to 6 carbon atoms are preferable and ethylene group and propylene groups are more preferable from the same standpoint as that described above for $R^1$.

The above polycarbonate compound can be produced in accordance with various processes. In general, the object polycarbonate compound can be produced by reacting a diester of carbonic acid or a derivative forming an ester of carbonic acid such as phosgene with an alkylene glycol or a polyoxyalkylene glycol in accordance with a conventional process.

The lubricating oil of the present invention may comprise a single type or a plurality of types of the polycarbonate compound represented by general formula (I) and may comprise a single type or a plurality of types of the polycarbonate compound represented by general formula (II). The lubricating oil may comprise one or more type of the polycarbonate compound represented by general formula (I) and one or more types of the polycarbonate compound represented by general formula (II). The lubricating oil may further comprise compounds having oxygen such as polyether compounds, examples of which include polyoxyalkylene glycol derivatives and polyvinyl ether derivatives, and

polyester derivatives in combination with the polycarbonate compound described above as long as the object of the present invention is not adversely affected.

It is preferable that the lubricating oil for refrigerators of the present invention has a kinematic viscosity at 40°C in the range of 2 to 2,000 $mm^2/s$, more preferably in the range of 5 to 1,500 $mm^2/s$ and most preferably in the range of 10 to 1,000 $mm^2/s$.

It is preferable that the lubricating oil for refrigerators of the present invention further comprises acid catchers, extreme pressure agents, oiliness agents and antioxidants.

Examples of the acid catchers include compounds having glycidyl ether group, epoxidized monoesters of fatty acids, epoxidized oils and fats and compounds having epoxycycloalkyl group. Examples of the extreme pressure agent include organic sulfur compound-based agents such as monosulfides, polysulfides, sulfoxides, sulfones, thiosulfinates, vulcanized oils and fats, thiocarbonates, thiophenes, thiazoles and esters of methanesulfonic acid; phosphoric acid ester-based agents such as monoesters of phosphoric acid, diesters of phosphoric acid and triesters of phosphoric acid such as tricresyl phosphate; phosphorous acid ester-based agents such as monoesters of phosphorous acid, diesters of phosphorous acid and triesters of phosphorous acid; thiophosphoric acid ester-based agents such as triesters of thiophosphoric acid; higher fatty acid-based agents; hydroxyaryl fatty acid-based agents; ester-based agents such as esters of polyhydric alcohols and esters of acrylic acid; organic chlorine compound-based agents such as chlorinated hydrocarbons and chlorinated derivatives of carboxylic acids; organic fluorine compound-based agents such as fluorinated aliphatic carboxylic acids, fluorinated ethylene resins, fluorinated alkylpolysiloxanes and fluorinated graphite; alcohol-based agents such as higher alcohols; naphthenic acid salt-based agents such as lead naphthenate; fatty acid salt-based agents such as lead salts of fatty acids; thiophosphoric acid salt-based agents such as zinc dialkyldithiophosphates; thiocarbamic aid salt-based agents; and metal compound-based agents such as organomolybdenum compounds, organotin compounds, organogermanium compounds and esters of boric acid. Examples of the antioxidant include phenol-based antioxidants such as 2,6-di-tert-butyl-p-cresol and amine-based antioxidants such as α-naphthylamine.

Preferable examples of the oiliness agent include (x) compounds obtained by etherification of aliphatic polyhydric alcohols having a functionality of 3 to 6 and (y) compounds obtained by etherification of condensates of two or three molecules of aliphatic polyhydric alcohols having a functionality of 3 to 6.

The above component (x) and component (y) will be described in the following. As the compound obtained by etherification of an aliphatic polyhydric alcohol having a functionality of 3 to 6 of component (x), compounds represented by the following general formulae (XVIII-a) to (XVIII-f) are preferable.

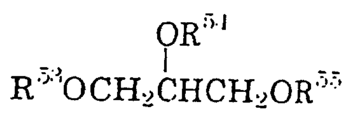

· · · (XVIII-a)

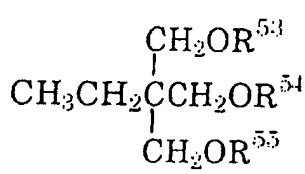

· · · (XVIII-b)

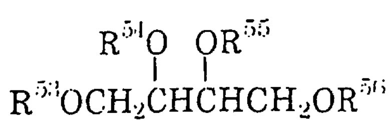

· · · (XVIII-c)

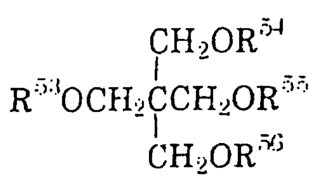

· · · (XVIII-d)

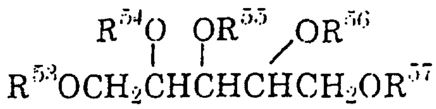 · · · (XVIII-e)

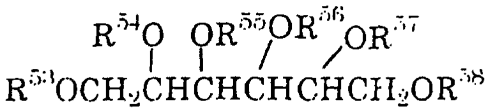 · · · (XVIII-f)

In the above formulae, $R^{53}$ to $R^{58}$ each represent hydrogen atom or an alkyl group, an aryl group, an aralkyl group or an acyl group which has 1 to 18 carbon atoms and may be linear or branched. The atoms or the groups represented by $R^{53}$ to $R^{58}$ may be the same with or different from each other. $R^{53}$ to $R^{58}$ may each represent a glycol ether residue group represented by $-(R^aO)_x-R^b$, wherein $R^a$ represents an alkylene group having 2 to 6 carbon atoms, $R^b$ represents an alkyl group, an aryl group, an aralkyl group or an acyl group which has 1 to 20 carbon atoms and **x** represents an integer of 1 to 10.

Examples of the aliphatic polyhydric alcohol having a functionality of 3 to 6 include glycerol, trimethylolpropane, erythritol, pentaerythritol, arabitol, sorbitol and mannitol. Examples of the group represented by $R^{53}$ to $R^{58}$ in the above general formulae (XVIII-a) to (XVIII-f) include methyl group, ethyl group, n-propyl group, isopropyl group, various types of butyl group, various types of pentyl group, various types of hexyl group, various types heptyl group, various types of octyl group, various types of nonyl group, various types of decyl group, various types of undecyl group, various types of dodecyl group, various types of tridecyl group, various types of tetradecyl group, various types of pentadecyl group, various types of hexadecy group, various types of heptadecyl group, various types of octadecyl group, phenyl group and benzyl group. $R^{47}$ to $R^{52}$ may also represent hydrogen atom and, in this case, the above compound is a partial ether.

As for the compound obtained by etherification of a condensate of two or three molecules of aliphatic polyhydric alcohols having a functionality of 3 to 6 of component (y), for example, compounds obtained by etherification of alcohols corresponding to general formula (XVIII-a) are represented by general formulae (XVIII-g) and (XVIII-h) and compounds obtained by etherification of alcohols corresponding to general formula (XVIII-d) are represented by general formulae (XVIII-i) and (XVIII-j):

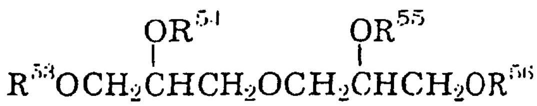 · · · (XVIII-g)

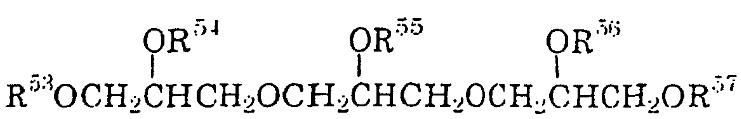 · · · (XVIII-h)

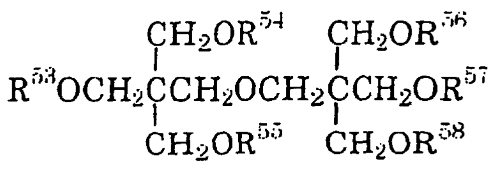 · · · (XVIII-i)

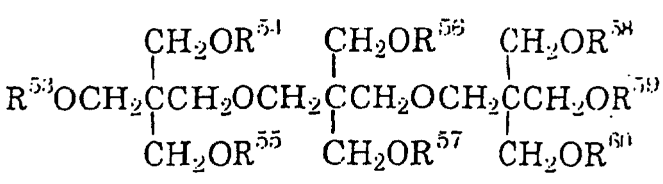 · · · (XVIII-j)

In the above formulae, $R^{53}$ to $R^{60}$ are the same as those described for $R^{53}$ to $R^{58}$ and the atoms or groups represented by $R^{53}$ to $R^{60}$ may be the same with or different from each other.

Examples of the compound obtained by etherification of a condensate of two or three molecules of an aliphatic polyhydric alcohols having a functionality of 3 to 6 include diglycerol, ditrimethylolpropane, dipentaerythritol, disorbitol, triglycerol, tritrimethylolpropane, tripentaerythritol and trisorbitol.

Examples of components (x) and (y) represented by the above general formulae (XVIII-a) to (XVIII-j) include trihexyl ether of glycerol, dimethyl octyl triether of glycerol, di(methyloxyisopropylene) dodecyl triether of glycerol, diphenyl octyl triether of glycerol, di(phenyloxy-isopropylene) dodecyl triether of glycerol, trihexyl ether of trimethylol-propane, dimethyl octyl triether of trimethylolpropane, di(methyloxy-isopropylene) dodecyl triether of trimethylolpropane, tetrahexyl ether of pentaerythritol, trimethyl octyl tetraether of pentaerythritol, tri(methyloxyisopropylene) dodecyl tetraether of pentaerythritol, hexapropyl ether of sorbitol, tetramethyl octyl pentaether of sorbitol, hexa(methyloxyisopropylene) ether of sorbitol, tetrabutyl ether of diglycerol, dimethyl dioctyl tetraether of diglycerol, tri(methyloxy-isopropylene) dodecyl tetraether of diglycerol, pentaethyl ether of triglycerol, trimethyl dioctyl pentaether of triglycerol, tetra (methyloxy-isopropylene) decyl pentaether of triglycerol, tetrabutyl ether of ditrimethylolpropane, dimethyl dioctyl tetraether of ditrimethylolpropane, tri(methyloxyisopropylene) dodecyl tetraether of ditrimethylolpropane, pentaethyl ether of tritrimethylolpropane, trimethyl dioctyl pentaether of tritrimethylolpropane, tetra(methyloxyisopropylene) decyl pentaether of tritrimethylolpropane, hexapropyl ether of dipentaerythritol, pentamethyl octyl hexaether of dipentaerythritol, hexa(methyloxyisopropylene) ether of dipentaerythritol, octapropyl ether of tripentaerythritol, pentamethyl octyl hexaether of tripentaerythritol, hexa(methyloxyisopropylene) ether of tripentaerythritol, octamethyl dioctyl decaether of disorbitol and deca(methyloxyisopropylene) ether of disorbitol. Among these compounds, diphenyl octyl triether of glycerol, di(methyloxyisopropylene) dodecyl triether of trimethylolpropane, tetrahexyl ether of pentaerythritol, hexapropyl ether of sorbitol, dimethyl dioctyl tetraether of diglycerol, tetra(methyloxyisopropylene) decyl pentaether of triglycerol, hexapropyl ether of pentaerythritol and pentamethyl octyl hexaether of tripentaerythritol are preferable.

The kinematic viscosity of components (x) and (y) at 40°C is in the range of 5 to 200 $mm^2/s$ and preferably in the range of 10 to 100 $mm^2/s$. When the kinematic viscosity is smaller than 5 $mm^2/s$, the effect of improving the Lubricity and preventing clogging of capillaries is small. When the kinematic viscosity exceeds 200 $mm^2/s$, miscibility with the refrigerant decreases (the temperature of phase separation is elevated). Therefore, such kinematic viscosities are not preferable. In the lubricating oil composition for refrigerators of the present invention, the above components (x) and (y) may be used singly or in combination of two or more. It is preferable that the amount of components (x) and (y) are in the range of 0.1 to 30% by weight based on the amount of the entire composition. When the amount is less than 0.1% by weight, the object of the present invention is not sufficiently achieved. When the amount exceeds 30% by weight, the effect is not exhibited to the degree expected from the amount and solubility into the base oil occasionally decreases. It is more preferable that the amount is in the range of 0.1 to 15% by weight and most preferably in the range of 0.5 to 10% by weight.

The lubricating oil for refrigerators of the present invention may further comprise other additives conventionally used for lubricating oils such as metal inactivators, defoaming agents, detergent dispersants, viscosity index improvers, oiliness agents, antiwear additives, rust preventives, corrosion inhibitors and pour pint improvers, where desired.

Examples of the metal inactivator include benzotriazole derivatives. Examples of the defoaming agent include silicone oils such a dimethylpolysiloxane and polymethacrylates. Examples of the detergent dispersant include sulfonates, phenates and succinimide. Examples of the viscosity index improver include polymethacrylates, polyisobutylene, ethylene-propylene copolymers and hydrogenated styrene-diene copolymers.

The hydraulic fluid composition for refrigerators of the present invention comprises (A) a refrigerant having no chlorine atoms and one carbon atom and (B) a lubricating oil for refrigerators of the present invention described above.

Examples of the refrigerant having no chlorine atoms and one carbon atom include difluoromethane (R32). The amounts of component (A) and component (B) are selected in a manner such that the ratio of the amount by weight of component (A) to the amount by weight of component (B) is, in general, in the range of 5:95 to 99:1 and preferably in the range of 10:90 to 99:1. When the amount of the refrigerant is smaller than the above range, the refrigerating ability decreases. When the amount of the refrigerant exceeds the above range, the lubricity decreases. Therefor, such amounts are not preferable.

The lubricating oil for refrigerators of the present invention can be applied to various types of refrigerators. In particular, the lubricating oil for refrigerators of the present invention is advantageously applied to compression-type refrigerating cycles of compression-type refrigerators. For example, the lubricating oil can be advantageously applied to refrigerators disclosed in Japanese Patent Application Laid-Open Nos. Heisei 4(1992)-183788, Heisei 8(1996)-259975, Heisei 8(1996)-240362, Heisei 8(1996)-253779, Heisei 8(1996)-240352, Heisei 5(1993)-17792, Heisei 8 (1996)-226717 and Heisei 8(1996)-231972. For example, the advantageous effects can be exhibited when the lubricating oil of the present invention is applied to compression-type refrigerating cycles having an oil separator and/or a hot gas line such as the refrigerating cycles shown in Figures 1 to 3. In general, a compression-type refrigerating cycle

is constituted with a compressor, a condenser, an expansion valve and an evaporator. As the lubricating oil for a refrigerator, a lubricating oil exhibiting excellent miscibility with the refrigerant used for the refrigerator is used. However, when a refrigerant comprising component (A) as the main component is used for the above refrigerating cycle and the refrigerator is lubricated with a conventional refrigerating oil, antiwear is poor and a stable operation for a long period time cannot be achieved due to insufficient stability. In particular, the drawbacks are marked when a capillary tube is used as the expansion valve in the refrigerating cycle of a refrigerator such as an electric refrigerator and a small air conditioner. The lubricating oil of the present invention can be effectively used as the lubricating oil composition even when a compression-type refrigerating cycle having an oil separator and/or a hot gas line is operated using a refrigerant comprising component (A) as the main component.

The hydraulic fluid composition for a refrigerator of the present invention exhibits remarkably excellent miscibility between component (A) and component (B). The maximum temperature in the region of phase separation at the low temperature side is -10°C or lower, more preferably -20°C or lower, still more preferably -30°C or lower, still more preferably -40°C or lower and most preferably -50°C or lower.

The hydraulic fluid composition of the present invention does not cause phase separation at the low temperature side during operation of a refrigerator since the maximum temperature in the region of phase separation at the low temperature side is -10°C or lower and enables stable operation of the refrigerator.

EXAMPLES

The present invention will be described more specifically with reference to examples in the following. However, the present invention is not limited to the examples.

Preparation Example 1

Into a 1 liter four-necked glass flask equipped with a stirrer, a thermometer, an inlet for nitrogen and a distillation head for concentrating the distillate, 360.6 g (4.0 moles) of dimethyl carbonate, 268.8 g (2.0 moles) of dipropylene glycol and 3.9 g (0.02 moles) of a 28% by weight methanol solution of sodium methoxide as the catalyst were placed and the resultant mixture was heated at 120°C for 5 hours in an oil bath while nitrogen gas was passed at a rate of 50 ml/minute. When distillation of methanol did not take place any more, the heating was stopped and 500 ml of toluene was added to the mixture. The obtained toluene solution of the product was washed with 300 ml of pure water and the washing water was not alkaline after the washing was repeated five times. Toluene was completely removed by distillation using a rotary evaporator under evacuation by an aspirator at 120°C for 30 minutes, followed by evacuation by a vacuum pump at 133 Pa for 30 minutes and 295 g of a polycarbonate of dipropylene glycol (methyl group at the chain ends):

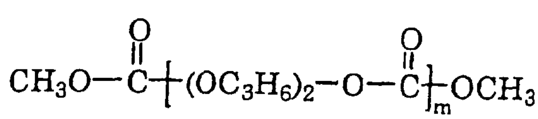

of the object compound was obtained.

Preparation Example 2

In accordance with the same procedures as those conducted in Preparation Example 1 except that 236.3 g (2.0 moles) of 3-methyl-1,5-pentanediol was used in place of 268.8 g of dipropylene glycol, 255 g of a polycarbonate of 3-methyl-1,5-pentanediol (methyl group at the chain ends):

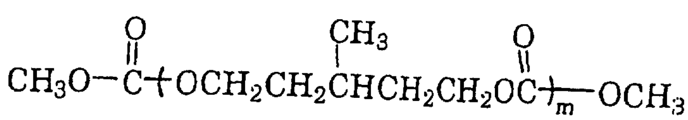

of the object compound was obtained.

Preparation Example 3

Into a 500 ml four-necked glass flask equipped with a stirrer, a thermometer, an inlet for nitrogen and a distillation head for concentrating the distillate, 261.4 g (1.5 moles) of di-n-butyl carbonate, 134.2 g (1.0 mole) of dipropylene glycol and 1.9 g (0.01 mole) of a 28% by weight methanol solution of sodium methoxide as the catalyst were placed. The resultant mixture was heated at 140°C for 3 hours in an oil bath while nitrogen gas was passed at a rate of 30 ml/minute and then the reaction was allowed to proceed further by heating at 160°C for 2 hours. n-Butanol formed by the carbonate exchange reaction was removed by distillation during the heating. The reaction was allowed to proceed further while the residual di-n-butyl carbonate was removed by distillation under evacuation to 10 kPa by an aspirator at the temperature kept at 160°C. After the heating was stopped and the pressure was adjusted at the atmospheric pressure, 300 ml of toluene was added to the reaction product. The obtained toluene solution of the product was washed with 200 ml of pure water and the washing water was not alkaline after the washing was repeated five times. Toluene was completely removed by distillation using a rotary evaporator under evacuation by an aspirator at 120°C for 30 minutes, followed by evacuation by a vacuum pump at 133 Pa for 30 minutes and 194 g of a polycarbonate of dipropylene glycol (n-butyl group at the chain ends):

$$C_4H_9O\overset{O}{\overset{\|}{C}}[(OC_3H_6)_2O\overset{O}{\overset{\|}{C}}]_n-OC_4H_9$$

of the object compound was obtained.

Preparation Example 4

Into a 1 liter four-necked glass flask equipped with a stirrer, a thermometer, an inlet for nitrogen and a distillation head for concentrating the distillate, 129.8 g (0.8 moles) of diethylene glycol mono-n-butyl ether, 433.0 g (4.8 moles) of dimethyl carbonate, 214.7 g (1.6 moles) of dipropylene glycol and 3.1 g (0.016 moles) of a 28% by weight methanol solution of sodium methoxide as the catalyst were placed. The resultant mixture was heated at 105°C for 6 hours in an oil bath while nitrogen gas was passed at a rate of 50 ml/minute. Methanol formed by the carbonate exchange reaction was removed by distillation together with a portion of dimethyl carbonate. The reaction was allowed to proceed further while the residual dimethyl carbonate was removed by distillation at the reaction temperature slowly elevated to 140°C over 2 hours. After the heating was stopped, 500 ml of toluene was added to the reaction product. The obtained toluene solution of the product was washed with 300 ml of pure water and the washing water was not alkaline after the washing was repeated five times. Toluene was completely removed by distillation using a rotary evaporator under evacuation by an aspirator at 120°C for 30 minutes, followed by evacuation by a vacuum pump at 133 Pa for 30 minutes and 354 g of a mixture of polycarbonates of dipropylene glycol (the n-butyl diethylene glycol ether group and the methyl diethylene glycol ether group at the chain ends):

$$C_4H_9O(C_2H_4O)_2\overset{O}{\overset{\|}{C}}[(OC_3H_6)_2O\overset{O}{\overset{\|}{C}}]_n-(OC_2H_4)OC_4H_9$$

$$C_4H_9O(C_2H_4O)_2\overset{O}{\overset{\|}{C}}[(OC_3H_6)_2O\overset{O}{\overset{\|}{C}}]_n-OCH_3$$

of the object compound was obtained.

Preparation Example 5

In accordance with procedures similar to those conducted in Preparation Example 1, 360.6 g (4.0 moles) of dimethyl carbonate, 268.8 g (2.0 moles) of dipropylene glycol and 3.9 g (0.02 moles) of a 28% by weight methanol solution of sodium methoxide as the catalyst were placed into a flask. The resultant mixture was heated at 120°C for

5 hours in an oil bath while nitrogen gas was passed at a rate of 50 ml/minute. The reaction was allowed to proceed further for 1 hour while the residual dimethyl carbonate was removed by distillation under the pressure slowly reduced to 2.7 kPa by an aspirator. After adding 500 ml of toluene, the reaction product was treated in accordance with the same procedures as those conducted in Preparation Example 1 and 288 g of a polycarbonate of dipropylene glycol (methyl groups at the chain ends) of the object compound was obtained. (The chemical formula of the obtained compound was the same as that of the product in Preparation Example 1. This product had a high viscosity.)

The lubricating oils used for Examples and Comparative Examples as the samples contained 0.3% by weight of an $\alpha$-olefin oxide.

Example 1 to 4

Using the polycarbonate compounds obtained in Preparation Examples 1 to 4, the kinematic viscosity, the temperature of phase separation, the Lubricity and the stability were obtained in accordance with the following methods. The results are shown in Table 1-1.

The kinematic viscosity and the viscosity index of a base oil and the properties of a lubricating oil were obtained in accordance with the following methods.

(1) Kinematic viscosity

The kinematic viscosity was measured in accordance with the method of Japanese Industrial Standard K2283-1983 using a glass capillary viscometer at 40°C and at 100°C.

(2) Test of miscibility

A prescribed amount of a sample was placed into a pressure-resistance glass ampoule. The glass ampoule was connected to a vacuum piping and a piping of the refrigerant of difluoromethane (R32). After the ampoule was evacuated to remove gasses at the room temperature, the ampoule was cooled and a prescribed amount of the refrigerant of difluoromethane (R32) was taken into the ampoule. Then, the ampoule was sealed. To examine the miscibility at the low temperature side, the ampoule was cooled slowly from the room temperature to -50°C in a thermostatted chamber and the temperature at which the phase separation started was measured. The lower the temperature of phase separation, the more preferable the property at the low temperature side.

(3) Lubricity

The load of seizure was obtained in accordance with the method of ASTM D-3233 using a Falex friction tester of the closed type. The condition of the test was as follows: the amount of oil: 300 ml; the refrigerant: R32; the pressure: 0.8 MPaG; and the temperature: 50°C.

(4) Stability

Into an autoclave having an inner volume of 200 ml, 40 g of a sample oil, 40 g of the refrigerant of R32 gas and a metal catalyst containing copper, aluminum and iron were placed and water was added to the system in an amount such that the content of water was adjusted to 2,000 ppm. After the autoclave was closed and kept at 175°C for 21 days, the lubricating oil of the sample was analyzed.

Comparative Examples 1 to 4

The kinematic viscosity, the temperature of phase separation, the Lubricity and the stability were obtained in accordance with the same methods as those used in Examples. In Comparative Example 1, a polyol ester (POE) composed of pentaerythritol and a mixture of 2-ethylhexanoic acid and 3,5,5-trimethylhexanoic acid (the ratio of the amounts by mole: 0.5/0.5) was used. In Comparative Example 2, polypropylene glycol having methyl ether group at the chain ends (PAG) was used. In Comparative Example 3, polyvinyl ether (a random copolymer of ethyl vinyl ether and isobutyl vinyl ether (9:1)) was used. In Comparative Example 4, a monocarbonate of PPG (butyl ether group at one chain end and n-butyl carbonate group at the other chain end) expressed by the following formula:

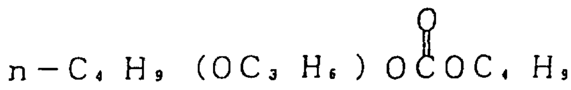

was used.

The results are shown in Table 1-2.

Table 1 - 1

| Example | 1 | 2 | 3 | 4 | 5 |
|---|---|---|---|---|---|
| kinematic viscosity ($mm^2/s$) | | | | | |
| at 40°C | 143 | 89.81 | 111.6 | 92.63 | 972.7 |
| at 100°C | 10.42 | 11.29 | 10.90 | 9.71 | 33.27 |
| Temperature of phase separation (°C) | | | | | |
| 10% by weight | -50> | -50> | -50> | -50> | -50> |
| 15% by weight | -50> | -50> | -50> | -50> | -50> |
| Lubricity (load of seizure) (N) | 4080 | 3750 | 3970 | 3630 | 4150 |
| Stability | | | | | |
| appearance of oil | good | good | good | good | good |
| precipitates | none | none | none | none | none |
| metal catalyst | no change | no change | no change | no change | no change |

Table 1 - 2

| Comparative Example | 1 | 2 | 3 | 4 |
|---|---|---|---|---|
| kinematic viscosity ($mm^2/s$) | | | | |
| at 40°C | 68.85 | 44.86 | 68.64 | 35.24 |
| at 100°C | 8.38 | 10.23 | 8.23 | 7.72 |
| Temperature of phase separation (°C) 1) | | | | |
| 10% by weight | sep.r.t. | sep.r.t. | sep.r.t. | sep.r.t. |
| 15% by weight | sep.r.t. | sep.r.t. | sep.r.t. | sep.r.t. |
| Lubricity (load of seizure) (N) | 3890 | 4220 | 3120 | 3360 |
| Stability | | | | |
| appearance of oil | yellowish brown | good | good | light yellow |
| precipitates | none | none | none | none |
| metal catalyst | change in color of Fe,Cu | no change | no change | change in Fe |

1) In the temperature of phase separation, % by weight means the value of:

$$[sample/(sample+R32)] \times 100$$

sep.r.t.: separation at the room temperature

## INDUSTRIAL APPLICABILITY

The lubricating oil for refrigerators of the present invention exhibits excellent miscibility with a refrigerant having no chlorine atoms and one carbon atom and, in particular, with difluoromethane.

The hydraulic fluid composition for refrigerators of the present invention which comprises the lubricating oil

for refrigerators of the present invention and the above refrigerant exhibits excellent antiwear, lubricity and stability.

## Claims

1. A lubricating oil for refrigerators which comprises a compound having oxygen as a base oil and is miscible with a refrigerant having no chlorine atoms and one carbon atom at a temperature of -10°C or lower when the lubricating oil is comprised at least in one content within a range of 3 to 50% by weight based on an entire amount of a mixture comprising the lubricating oil and the refrigerant.

2. A lubricating oil for refrigerators according to Claim 1, which comprises a compound having oxygen as a base oil and is miscible with a refrigerant having no chlorine atoms and one carbon atom at a temperature of -10°C or lower when the lubricating oil is comprised at least in one content within a range of 10 to 15% by weight based on an entire amount of a mixture comprising the lubricating oil and the refrigerant.

3. A lubricating oil for refrigerators according to Claims 1 and 2, which comprises a compound having oxygen as a base oil and is miscible with a refrigerant having no chlorine atoms and one carbon atom at a temperature of -10°C or lower when the lubricating oil is comprised in a content in a range of 3 to 50% by weight based on an entire amount of a mixture comprising the lubricating oil and the refrigerant.

4. A lubricating oil for refrigerators according to any one of Claims 1 to 3, wherein the compound having oxygen is a polycarbonate compound having at least two carbonate bonds in one molecule.

5. A lubricating oil for refrigerators according to Claim 4, wherein the polycarbonate compound is at least one compound selected from:
   compounds represented by general formula (I):

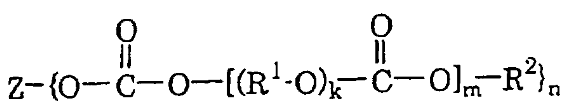

· · · (I)

wherein Z represents a residue group obtained by eliminating hydroxyl group from an alcohol having 1 to 12 carbon atoms and a functionality of n, $R^1$ represents a linear or branched alkylene group having 2 to 10 carbon atoms, $R^2$ represents a monovalent hydrocarbon group having 1 to 12 carbon atoms or a group having ether bond represented by $R^4(O\text{-}R^3)_p$-, $R^4$ representing hydrogen atom or a monovalent hydrocarbon group having 1 to 12 carbon atoms, $R^3$ representing a linear or branched alkylene group having 2 to 10 carbon atoms and **p** representing an integer of 1 to 20, **k** represents an integer of 1 to 30, **m** represents an integer of 1 to 50 and **n** represents an integer of 1 to 6; and
   compounds represented by general formula (II):

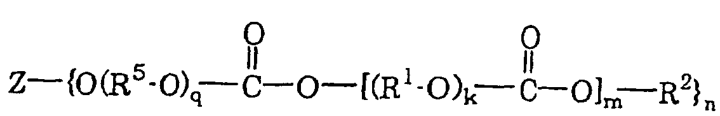

· · · (II)

wherein $R^5$ represents a linear or branched alkylene group having 2 to 10 carbon atoms, **q** represents an integer of 1 to 20 and Z, $R^1$, $R^2$, **k**, **m** and **n** are as described for general formula (I).

6. A lubricating oil for refrigerators according to Claim 5, wherein the compound represented by general formula (I) is a compound represented by general formula (I-a):

$$R^6-O-\overset{\overset{O}{\|}}{C}-O-[(R^1\cdot O)_k\cdot\overset{\overset{O}{\|}}{C}\cdot O]_m-R^2 \quad \cdots \quad (I\text{-}a)$$

wherein $R^6$ represents a residue group obtained by eliminating hydroxyl group from a monohydric alcohol having 1 to 12 carbon atoms and $R^1$, $R^2$, **k** and **m** are as described for general formula (I); and/or the compound represented by general formula (II) is a compound represented by general formula (II-a):

$$R^6-O(R^5\cdot O)_q\cdot\overset{\overset{O}{\|}}{C}-O-[(R^1\cdot O)k-\overset{\overset{O}{\|}}{C}-O]_m-R^2 \quad \cdots \quad (II-a)$$

wherein $R^1$, $R^2$, $R^5$, $R^6$, **k**, **m** and **q** are as described for general formulae (I), (II) and (I-a).

**7.** A lubricating oil for refrigerators according to Claim 6, wherein $R^1$ in general formulae (I-a) and (II-a) represents an alkylene group having 2 to 6 carbon atoms.

**8.** A lubricating oil for refrigerators according to Claim 7, wherein $R^1$ represents ethylene group or propylene group.

**9.** A lubricating oil for refrigerators according to any one of Claims 6, 7 and 8, wherein, in general formulae (I-a) and (II-a), $R^2$ represents a monovalent hydrocarbon group having 1 to 6 carbon atoms or a group having ether bond represented by $R^4(O-R^3)_p$-, $R^4$ representing hydrogen atom or a monovalent hydrocarbon group having 1 to 6 carbon atoms, $R^3$ representing a linear or branched alkylene group having 2 to 6 carbon atoms and **p** representing an integer of 1 to 10; and $R^6$ represents a linear or branched alkyl group having 1 to 6 carbon atoms.

**10.** A lubricating oil for refrigerators according to any one of Claims 1 to 9, which has a kinematic viscosity at 40°C of 2 to 2,000 $mm^2/s$.

**11.** A lubricating oil for refrigerators according to any one of Claim 10, which has a kinematic viscosity at 40°C of 10 to 1,000 $mm^2/s$.

**12.** A lubricating oil for refrigerators according to any one of Claims 1 to 11, which comprises an acid catcher.

**13.** A lubricating oil for refrigerators according to any one of Claims 1 to 12, which comprises at least one additive selected from a group consisting of extreme pressure agents, oiliness agents and antioxidants.

**14.** A hydraulic fluid composition for refrigerators which comprises (A) a refrigerant having no chlorine atoms and one carbon atom and (B) a lubricating oil for refrigerators described in any one of Claims 1 to 13.

**15.** A hydraulic fluid composition for refrigerators according to Claim 14, which comprises component (A) and component (B) in amounts such that a ratio of an amount by weight of component (A) to an amount by weight of component (B) is in a range of 5:95 to 99:1.

**16.** A hydraulic fluid composition for refrigerators according to any one of Claims 14 and 15, wherein the refrigerant of component (A) is difluoromethane.

Fig.1

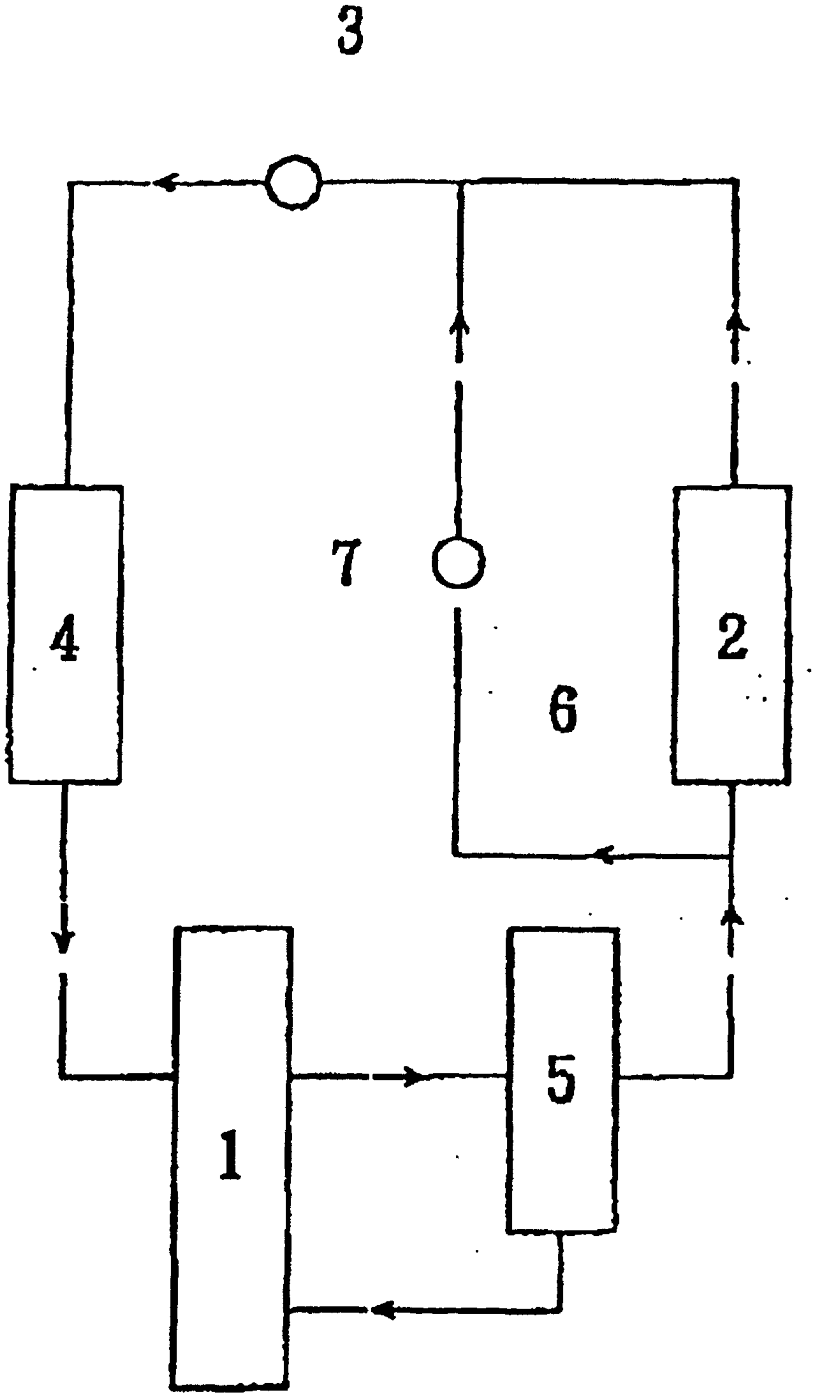

Fig.2

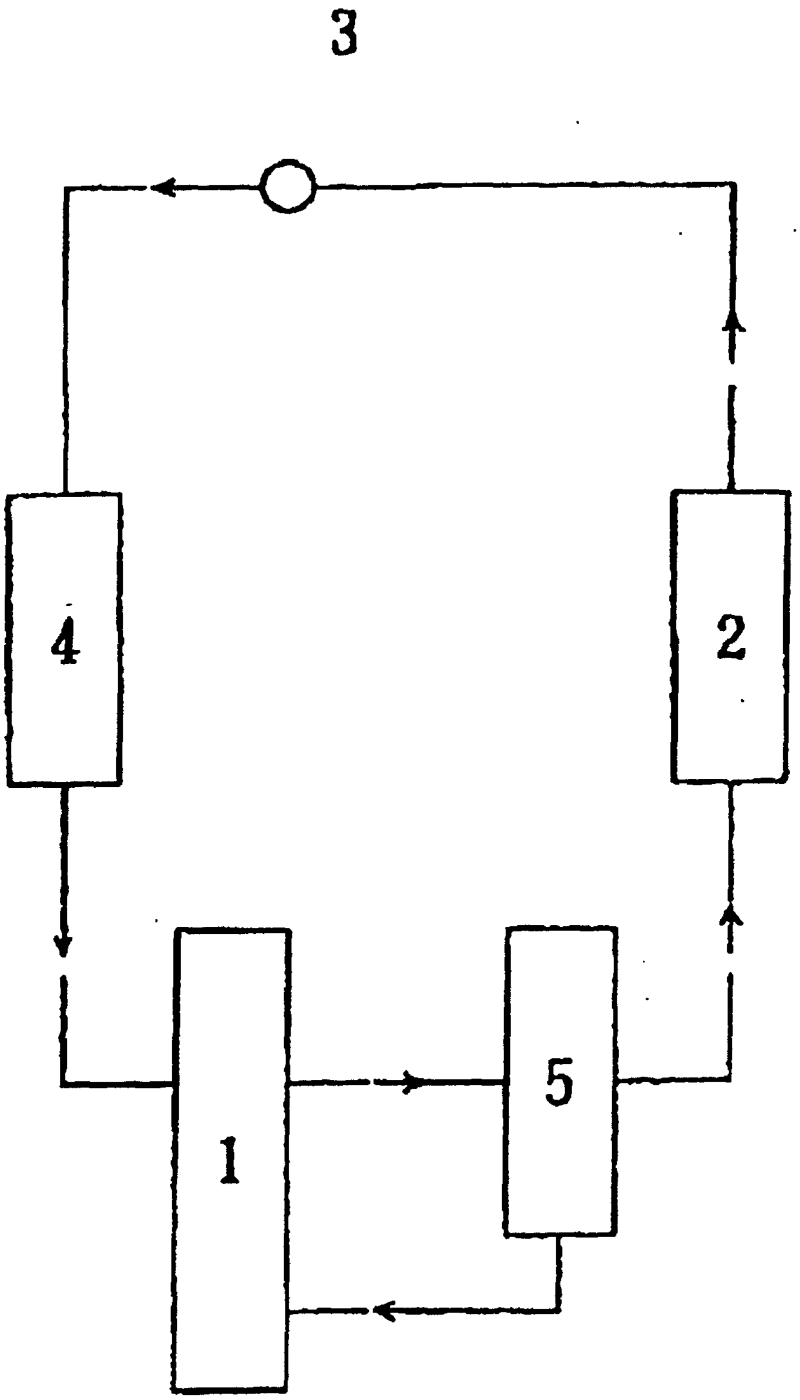

Fig.3

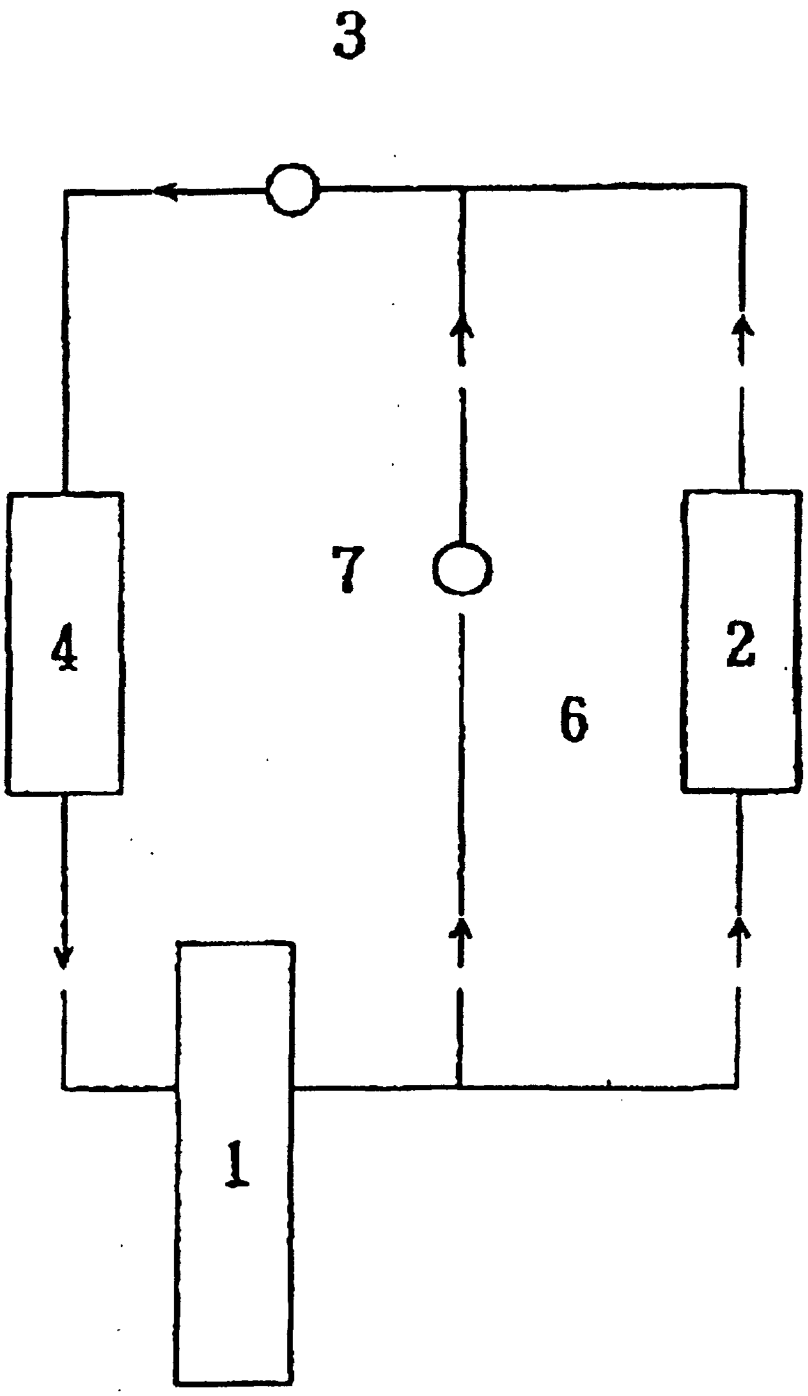

Fig.4

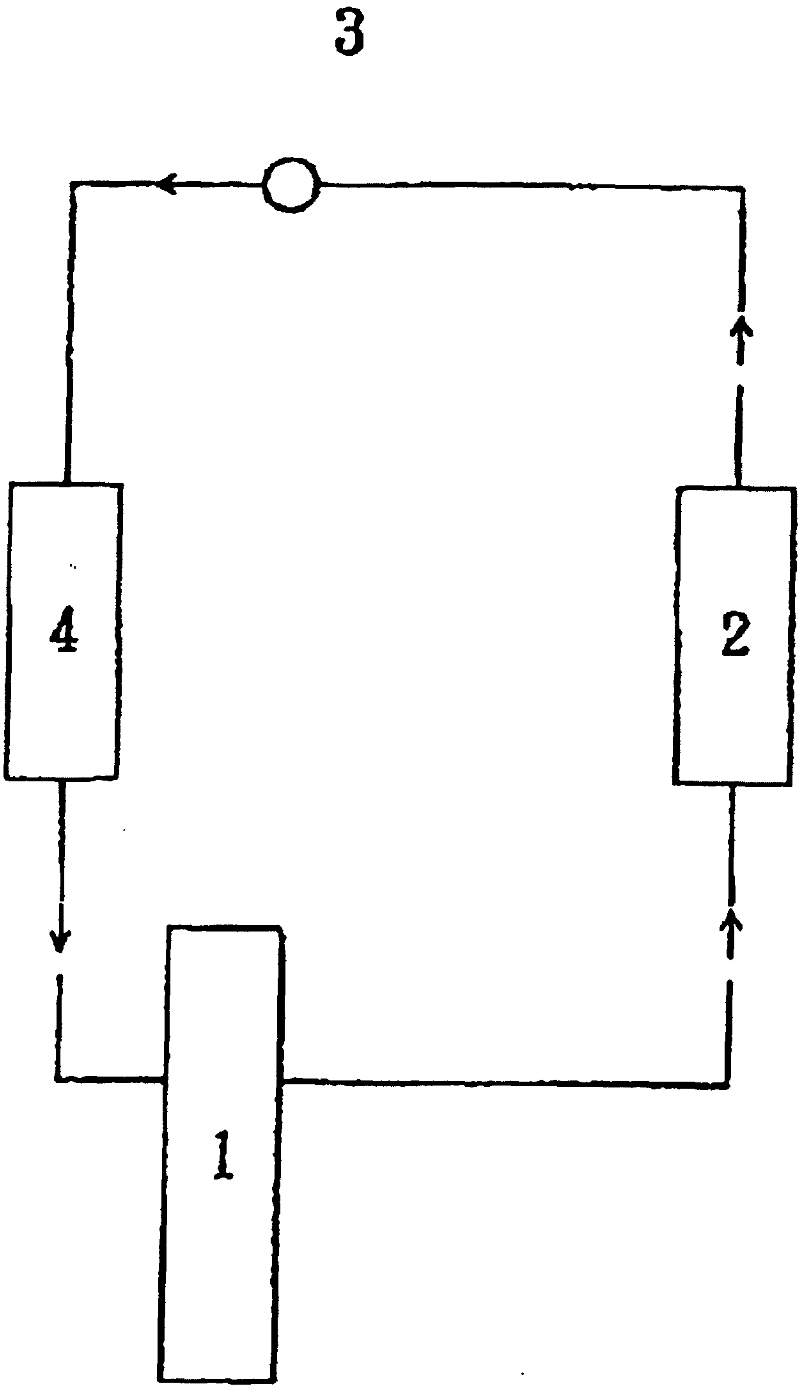

## INTERNATIONAL SEARCH REPORT

International application No. PCT/JP01/05119

A. CLASSIFICATION OF SUBJECT MATTER
Int.Cl$^7$ C10M 171/00, 105/08, 105/48, 107/20, 107/30, C09K 5/04 // C10N 40:30

According to International Patent Classification (IPC) or to both national classification and IPC

B. FIELDS SEARCHED

Minimum documentation searched (classification system followed by classification symbols)
Int.Cl$^7$ C10M 171/00, 105/08-105/48, 107/20-107/36, C09K 5/04, C10N 40:30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | EP 499793 A1 (Nippon Oil Co., Ltd.), 26 August, 1992 (26.08.92), Claims; page 7, line 4 to page 9, line 18 & JP 4-314789 A & JP 4-331289 A & JP 5-86381 A & JP 5-186784 A & US 5370809 A & DE 69201983 T2 & JP 11-100585 A | 1-16 |
| X | EP 452816 A2 (Nippon Oil Co., Ltd.), 23 October, 1991 (23.10.91), Claims; page 9, line 17 to page 11, line 1 & JP 4-18490 A & JP 4-57893 A & JP 5-63893 A & US 5262076 A & DE 69102672 T2 & US 5391311 A | 1-16 |
| X | JP 6-9977 A (Kao Corporation), 18 January, 1994 (18.01.94), Claims; Par. Nos. [0036], [0039] to [0040] (Family: none) | 1-16 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 August, 2001 (07.08.01) | 14 August, 2001 (14.08.01) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP01/05119

C (Continuation). DOCUMENTS CONSIDERED TO BE RELEVANT

| Category* | Citation of document, with indication, where appropriate, of the relevant passages | Relevant to claim No. |
|---|---|---|
| X | JP 9-67589 A (Kao Corporation),<br>11 March, 1997 (11.03.97),<br>Claims; Par. Nos. [0066], [0094], [0106], [0113]<br>(Family: none) | 1-16 |
| X | JP 11-12585 A (Kao Corporation),<br>19 January, 1999 (19.01.99),<br>Claims; Par. Nos. [0053] to [0054], [0070], [0073] to [0074]<br>(Family: none) | 1-16 |
| X | JP 3-217495 A (Idemitsu Kosan Co., Ltd.),<br>25 September, 1991 (25.09.91),<br>Claims; page 5, lower right column, line 8 to page 6, lower left column, line 6<br>(Family: none) | 1-16 |
| X<br>A | JP 2000-8062 A (Mitsui Chemicals, Ltd.),<br>11 January, 2000 (11.01.00),<br>Claims; Par. Nos. [0027], [0033] to [0034]<br>(Family: none) | 1-15<br>16 |

Form PCT/ISA/210 (continuation of second sheet) (July 1992)